# EUROPEAN PATENT SPECIFICATION

(11) **EP 2 773 073 B1**
(45) Date of publication and mention of the grant of the patent: **26.04.2017**
(21) Application number: 12857699.8
(22) Date of filing: 22.10.2012
(51) Int. Cl.: H04L 12/721, H04L 29/08, H04L 12/715, H04L 12/717, H04L 12/747

(54) **ENTRY GENERATION METHOD, MESSAGE RECEIVING METHOD, AND CORRESPONDING DEVICE AND SYSTEM**
EINGABEERZEUGUNGSVERFAHREN, NACHRICHTENEMPFANGSVERFAHREN SOWIE ENTSPRECHENDE VORRICHTUNG UND SYSTEM
PROCÉDÉ DE GÉNÉRATION D'ENTRÉES, PROCÉDÉ DE RÉCEPTION DE MESSAGES, ET DISPOSITIF ET SYSTÈME CORRESPONDANTS

(30) Priority: 12.12.2011 CN 201110412195
(43) Date of publication of application: 03.09.2014
(73) Proprietor: Huawei Technologies Co., Ltd., Longgang District Shenzhen, Guangdong 518129 (CN)
(72) Inventor: XIA, Yinben, Shenzhen Guangdong 518129 (CN); LI, Fengkai, Shenzhen Guangdong 518129 (CN)
(74) Representative: Gill Jennings & Every LLP
(86) International application number: PCT/CN2012/083268
(87) International publication number: WO 2013/086897

(56) References cited:
- CN-A- 1 852 253
- CN-A- 101 977 177
- US-A1- 2011 261 825
- US-A1- 2011 273 988
- 'OpenFlow Switch Specification, Version 1.1.0 Implemented' 28 February 2011, XP055132070 Retrieved from the Internet: <URL:www.openflow.org/documents/openflow-sp ec-v1.1.0.pdf>
- MOGUL J C ET AL: 'DevoFlow: Cost-Effective Flow Management for High Performance Enterprise Networks', [Online] 20 October 2010, pages 1 - 6, XP002692074 ISBN: 978-1-4503-0409-2 PROCEEDINGS OF THE 9TH ACM WORKSHOP ON. HOT TOPICS IN NETWORKS. HOTNETS-IX. OCTOBER 20-21, 2010. MONTEREY, CA, ACM Retrieved from the Internet: <URL:http://www.hpl.hp.com/personal/Puneet_ Sharma/docs/papers/hotnets2010.pdf> [retrieved on 2013-02-13]
- MARTIN CASADO ET AL: 'Rethinking Packet Forwarding Hardware', [Online] 01 January 2008, pages 1 - 4, XP055260570 Retrieved from the Internet: <URL:http://citeseerx.ist.psu.edu/viewdoc/d ownload?doi=10.1.1.228.646&rep=rep1&type=pd f> [retrieved on 2016-03-23]

## Description

### TECHINICAL FIELD

The present invention relates to the field of network communications, and in particular, to a method for generating an entry, a method for receiving a message, a stream forwarding apparatus, a control plane apparatus, and a communications system.

### BACKGROUND

A network architecture in which controlling and forwarding are separated is a new network architecture. The network architecture includes a stream forwarding apparatus and a control plane apparatus. The stream forwarding apparatus processes a received packet according to a flow table. The control plane apparatus controls the stream forwarding apparatus through a control channel.

The stream forwarding apparatus searches the flow table for a flow entry matching the received packet. To obtain an exact matching entry corresponding to the packet, the stream forwarding apparatus needs to send the packet or a packet header to the control plane apparatus, so that the control plane apparatus generates the exact matching entry and delivers the exact matching entry to the stream forwarding apparatus.

US 2011/0273988 A1 describes approaches to managing flows locally within a switch.

The prior art has the following technical problems:
to obtain the exact matching entry, the stream forwarding apparatus needs to interact with the control plane apparatus through the control channel, which occupies a bandwidth of the control channel. The document "DevoFlow: Cost-Effective Flow Management for High Performance Enterprise Networks" proposes a modified Openflow that mantains central control over important things but devolves other decisions to the switches as much as possible.

### SUMMARY

Embodiments of the present invention provide a method for generating an entry, a method for receiving a message, a stream forwarding apparatus, a control plane apparatus and a communications system, where the stream forwarding apparatus may obtain an exact matching entry without interacting with the control plane apparatus through a control channel.

Aspects of the invention are provided in the attached claims.

It can be seen that, with the embodiments of the present invention, a stream forwarding apparatus may generate a second entry according to a first entry that matches a received packet without interacting with a control plane apparatus, reducing an occupied bandwidth of a control channel between the stream forwarding apparatus and the control plane apparatus.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a flow chart of a method for generating an entry according to an embodiment of the present invention;
FIG. 2 is a schematic structural diagram of a flow table according to an embodiment of the present invention;
FIG. 3 is a schematic structural diagram of a first entry according to an embodiment of the present invention;
FIG. 4 is a schematic structural diagram of a second entry according to an embodiment of the present invention;
FIG. 5 is a flow chart of a method for receiving a message according to an embodiment of the present invention;
FIG. 6 is a schematic structural diagram of a stream forwarding apparatus according to an embodiment of the present invention;
FIG. 7 is a schematic structural diagram of a control plane apparatus according to an embodiment of the present invention; and
FIG. 8 is a schematic structural diagram of a communications system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Embodiments of the present invention relate to a network architecture in which controlling and forwarding are separated. The network architecture in which controlling and forwarding are separated includes a stream forwarding apparatus and a control plane apparatus. The stream forwarding apparatus processes a received packet according to a flow table. The control plane apparatus controls the stream forwarding apparatus through a control channel.

In the network architecture in which controlling and forwarding are separated, that controlling and forwarding are separated indicates that the stream forwarding apparatus and the control plane apparatus are separated, where the stream forwarding apparatus transfers a part of or all functions of a control plane to the control plane apparatus, and the stream forwarding apparatus is capable of communicating with the control plane apparatus. The stream forwarding apparatus may communicate with the control plane apparatus through the control channel.

The stream forwarding apparatus may forward the received packet according to the flow table. In specific implementation, forwarding a packet may be lay 2 forwarding, and may also be lay 3 forwarding. For details about lay 2 and lay 3, reference is made to an open systems interconnection model (Open Systems Interconnection model, OSI model).

In specific implementation, the stream forwarding apparatus may be a switch or a router.

The stream forwarding apparatus may specifically be an OpenFlow Switch (OpenFlow Switch) when the stream forwarding apparatus is a switch. For the OpenFlow Switch, reference is made to an OpenFlow Switch specification 1.0 (OpenFlow Switch Specification 1.0) issued by the openflow networking foundation (OpenFlow Networking Foundation, OFN), a standard formulation organization.

In specific implementation, the control plane apparatus may be an OpenFlow Controller (OpenFlow Controller). For the OpenFlow Controller, reference is made to the OpenFlow Switch specification 1.0 issued by the openflow networking foundation, a standard formulation organization.

In specific implementation, the control channel may be a secure channel (Secure Channel) for interaction between the OpenFlow Switch and the OpenFlow Controller. For specific information, reference is made to the OpenFlow Switch specification 1.0 issued by the openflow networking foundation, a standard formulation organization.

### Embodiment 1

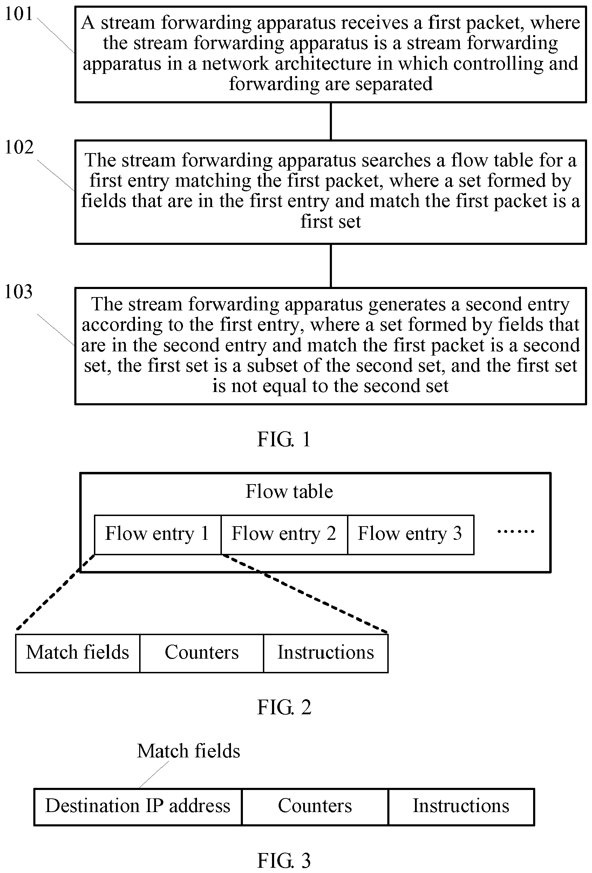

An embodiment of the present invention provides a method for generating an entry, and a stream forwarding apparatus may obtain an exact matching entry without interacting with a control plane apparatus. As shown in FIG. 1, the method includes the following steps.

101: A stream forwarding apparatus receives a first packet, where the stream forwarding apparatus is a stream forwarding apparatus in a network architecture in which controlling and forwarding are separated.

In specific implementation, the stream forwarding apparatus may be an OpenFlow Switch.

In specific implementation, the first packet may be an internet protocol packet (Internet Protocol Packet, IP packet), or a media access control (Media Access Control, MAC) protocol frame (Frame).

102: The stream forwarding apparatus searches a flow table for a first entry matching the first packet, where a set formed by fields that are in the first entry and match the first packet is a first set.

The flow table (Flow Table) is saved in the stream forwarding apparatus, and includes the first entry. The first entry may specifically be implemented as follows: The control plane apparatus generates the first entry, and sends the first entry to the stream forwarding apparatus.

The flow table may include multiple flow entries (Flow Entry). FIG. 2 is a schematic structural diagram of a flow table according to an embodiment of the present invention. Referring to FIG. 2, the flow table includes multiple flow entries, which are respectively a flow entry 1, a flow entry 2, a flow entry 3, and so on.

Referring to FIG. 2, the flow entry may include match fields (Match Fields), counters (Counters) and instructions (Instructions). In specific implementation, the flow entry may further be in another structure. The match fields are used to determine whether a packet that enters the stream forwarding apparatus matches the entry in the flow table. The match fields may include one or more fields. In specific implementation, the foregoing fields may be an inbound interface, a source MAC protocol address, a destination MAC protocol address, a virtual local area network (Virtual Local Area Network, VLAN) identity (Identity, ID), a multi-protocol label switching (Multi-Protocol Label Switching, MPLS) label, a source internet protocol version 4 (Internet Protocol version 4, IPv4) address, a destination IPv4 address, a user datagram protocol (User Datagram Protocol, UDP) port, a transmission control protocol (Transmission Control Protocol, TCP) port, or a stream control transmission protocol (Stream Control Transmission Protocol, SCTP) port.

If all fields in the match fields of the flow entry match corresponding fields in the first packet, the flow entry matches the packet. The first entry is the flow entry matching the first packet; therefore, all fields in the match fields of the first entry match corresponding fields in the first packet.

It should be noted that, if the match fields of the flow entry include an inbound interface, that an inbound interface actually used by the stream forwarding apparatus when receiving a packet matches the inbound interface in the match fields is a necessary condition for the flow entry to match the packet.

The first set is a set formed by fields that are in the first entry and match the first packet. Therefore, the first set includes all the fields in the match fields of the first entry.

FIG. 3 is a schematic structural diagram of a first entry according to an embodiment of the present invention. The first entry may also in another structure. Referring to FIG. 3, the first entry is formed of match fields, counters and instructions. The match fields include one field, that is, a destination internet protocol (Internet Protocol, IP) address, and the value of the field is 191.1.1.1. The first packet is a MAC protocol frame and specifically includes a MAC protocol header, an IP header and a payload, where the MAC protocol header includes a source MAC protocol address and a destination MAC protocol address, and the IP header includes a source IP address and a destination IP address. Fields of the destination IP address in the first packet are fields corresponding to the match fields of the first entry, and the value of the fields of the destination IP address in the first packet is 191.1.1.1. The first set is formed of an element, where the element is the destination IP address, and the value of the element is 191.1.1.1.

103: The stream forwarding apparatus generates a second entry according to the first entry, where a set formed by fields that are in the second entry and match the first packet is a second set, the first set is a subset of the second set, and the first set is not equal to the second set.

The second entry is similar to the first entry in specific implementation. For details, reference is made to the description about the first entry in 102.

The second entry is a flow table entry matching the first packet. The second set is a set formed by fields that are in the second entry and match the first packet. The match fields in the second entry include multiple fields. The second set is formed of multiple fields in the match fields of the second entry.

The first set is a subset of the second set, and the first set is not equal to the second set. That is to say, the number of elements in the second set is greater than the number of elements in the first set.

In specific implementation, generating the second entry according to the first entry may be:
parsing the first packet, and extracting a field from a packet header of the first packet, where the foregoing field may be one or more fields, and is a field other than fields included in the match fields of the first entry, and
copying content of the first entry, and storing the copied content in a storage space corresponding to the second entry to be generated, where the copied content is consistent with the first entry, and the copied content includes the match fields, and adding the field extracted from the packet header of the first packet to the match fields, so as to obtain the second entry, where the number of fields in the match fields of the second entry is greater than the number of fields in the match fields of the first entry.

Generating the second entry according to the first entry may also be implemented in another manner. For example, the content of the first entry is copied first, and then the field extracted from the first packet is added to the copied content. In addition, the fields other than the match fields of the second entry may be inconsistent with the fields other than the match fields of the first entry.

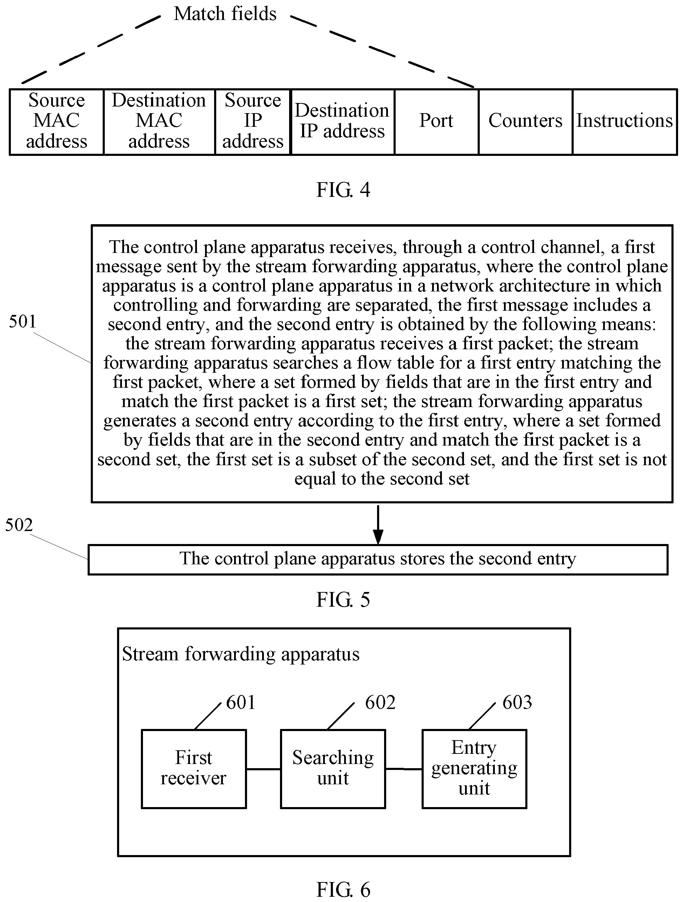

FIG. 4 is a schematic structural diagram of a second entry according to an embodiment of the present invention. The second entry may adopt other structures. Referring to FIG. 4, the second entry is formed of match fields, counters and instructions. The counters of the second entry are the same as counters of a first entry, the instructions of the second entry are the same as instructions of the first entry, and the match fields of the second entry include a source MAC protocol address, a destination MAC protocol address, a source IP address, a destination IP address and a port. A first packet is a MAC protocol frame and specifically includes a MAC protocol header, an IP header and a payload, where the MAC protocol header includes a source MAC protocol address and a destination MAC protocol address, and the IP header includes a source IP address and a destination IP address. The source IP address, destination IP address, source MAC protocol address, destination MAC protocol address, and port in the first packet are fields corresponding to the match fields of the second entry. A first set is formed of five elements, which specifically are the source IP address, destination IP address, source MAC protocol address, destination MAC protocol address, and port.

It can be seen that, with the method provided in the embodiment, a stream forwarding apparatus may generate the second entry according to a first entry matching a received packet. The stream forwarding apparatus does not need to interact with a control plane apparatus, reducing an occupied bandwidth of a control channel between the stream forwarding apparatus and the control plane apparatus.

Optionally,
after the stream forwarding apparatus generates the second entry according to the first entry, the method further includes:
104: The stream forwarding apparatus processes the first packet according to the second entry.

Processing the first packet may be determining an outbound interface for forwarding the first packet, encapsulating the first packet, sending the first packet to the control plane apparatus, or discarding the first packet. In specific implementation, the second entry may include the instructions, and for details, reference may be made to FIG. 4. The stream forwarding apparatus may process the first packet according to the instructions in the second entry.

Optionally,
after the stream forwarding apparatus generates the second entry according to the first entry, the method further includes:
105: The stream forwarding apparatus sends the second entry to the control plane apparatus through the control channel, where the control plane apparatus is a control plane apparatus in a network architecture in which controlling and forwarding are separated.

In specific implementation, the control plane apparatus may be an Openflow Controller.

In implementation, the control channel may be a secure channel for interaction between the OpenFlow Controller and the Openflow Switch.

In specific implementation, the sending, by the stream forwarding apparatus, the second entry may be:
defining a new packet type in a communication protocol of the stream forwarding apparatus and the control plane apparatus, where the packet type is used to identify that the packet carries an exact matching entry generated by the stream forwarding apparatus. When receiving the packet, the control plane apparatus may identify that the packet carries an exact matching entry generated by the stream forwarding apparatus according to a packet header. The stream forwarding apparatus may encapsulate the second entry in the packet according to the new packet type, and send the packet to the control plane apparatus through the control channel.

After receiving the second entry, the control plane apparatus may save the second entry.

The control plane apparatus may obtain, according to the saved second entry, the number of packets that is received by the stream forwarding apparatus and matches the second entry.

In specific implementation, the process may be:
the stream forwarding apparatus may calculate the number of packets that is received by the stream forwarding apparatus and matches the second entry through a counter, and record a calculation result. Referring to FIG. 4, the second entry may include the counters. The control plane apparatus may obtain the calculation result according to the saved second entry. In specific implementation, the control plane apparatus may deliver the match fields in the saved second entry to the stream forwarding apparatus. The stream forwarding apparatus searches for the second entry according to the match fields sent by the control plane apparatus. A specific searching process is similar to a process in which the stream forwarding apparatus searches for the first entry according to the first packet, and for details, reference is made to 102, which is not described herein again. After finding the second entry, the stream forwarding apparatus sends the recorded calculation result in the second entry to the control plane apparatus.

Optionally,
after the stream forwarding apparatus generates the second entry according to the first entry, the method further includes the following steps.
106: The stream forwarding apparatus receives a second packet.
107: The stream forwarding apparatus determines whether the second entry matches the second packet, and when the second entry matches the second packet, the stream forwarding apparatus processes the second packet according to the second entry.

Compared with the first entry, the second entry is an exact matching entry. If a packet received by the stream forwarding apparatus matches the second entry, the packet is sure to match the first entry.

Through the solution, the stream forwarding apparatus may process, according to the second entry, a packet that matches both the first entry and the second entry.

Optionally,
108: When the second entry does not match the second packet, the stream forwarding apparatus determines whether the first entry matches the second packet; and when the first entry matches the second packet, the stream forwarding apparatus processes the second packet according to the first entry.

Through the solution, the stream forwarding apparatus may process, according to the first entry, a packet that matches the first entry but does not match the second entry.

### Embodiment 2

An embodiment of the present invention provides a method for receiving a message, and a control plane apparatus may obtain an exact matching entry sent by a stream forwarding apparatus. In a process of obtaining an exact matching entry, the stream forwarding apparatus does not need to interact with the control plane apparatus. As shown in FIG. 2, the method includes:

201: The control plane apparatus receives, through a control channel, a first message sent by the stream forwarding apparatus, where the control plane apparatus is a control plane apparatus in a network architecture in which controlling and forwarding are separated, the first message includes a second entry, and the second entry is obtained by the following means: the stream forwarding apparatus receives a first packet, where the stream forwarding apparatus is a stream forwarding apparatus in a network architecture in which controlling and forwarding are separated; the stream forwarding apparatus searches a flow table for a first entry matching the first packet, where a set formed by fields that are in the first entry and match the first packet is a first set; the stream forwarding apparatus generates a second entry according to the first entry, where a set formed by fields that are in the second entry and match the first packet is a second set, the first set is a subset of the second set, and the first set is not equal to the second set.

For specific implementation of the second entry, reference is made to 101, 102, and 103 in Embodiment 1, which is not described herein again.

In specific implementation, the control plane apparatus may be an OpenFlow Controller.

In implementation, the control channel may be a secure channel for interaction between an Openflow Switch and the OpenFlow Controller.

The stream forwarding apparatus sends the second entry to the control plane apparatus. The second entry may be encapsulated in a Packet In packet. For details about the Packet In packet, reference is made to openflow switch specification *1.0.*

202: The control plane apparatus stores the second entry.

After receiving the second entry, the control plane apparatus may save the second entry.

The control plane apparatus may obtain, according to the saved second entry, the number of packets that is received by the stream forwarding apparatus and matches the second entry.

In specific implementation, the process may be:
the stream forwarding apparatus may calculate the number of packets that is received by the stream forwarding apparatus and matches the second entry through a counter, and record a calculation result. Referring to FIG. 4, the second entry may include the counters. The control plane apparatus may obtain the calculation result according to the saved second entry. In specific implementation, the control plane apparatus may deliver the match fields in the saved second entry to the stream forwarding apparatus. The stream forwarding apparatus searches for the second entry according to the match fields sent by the control plane apparatus. A specific searching process is similar to the process in which the stream forwarding apparatus searches for the first entry according to the first packet, and for details, reference is made to 102 in Embodiment 1, which is not described herein again. After finding the second entry, the stream forwarding apparatus sends the recorded calculation result in the second entry to the control plane apparatus.

It can be seen that, with the method provided in the embodiment, the control plane apparatus may obtain an exact matching entry generated by a stream forwarding apparatus. The exact matching entry is generated by the stream forwarding apparatus according to the first entry matching the received packet. In a process of generating an exact matching entry, the stream forwarding apparatus does not need to interact with the control plane apparatus. Therefore, the method provided in the embodiment reduces an occupied bandwidth of the control channel between the stream forwarding apparatus and the control plane apparatus.

### Embodiment 3

An embodiment of the present invention provides a stream forwarding apparatus, and the stream forwarding apparatus is a stream forwarding apparatus in a network architecture in which controlling and forwarding are separated. In a process of obtaining an exact matching entry, the stream forwarding apparatus does not need to interact with a control plane apparatus. The stream forwarding apparatus provided in the embodiment may be implemented in the method for generating an entry provided in Embodiment 1. As shown in FIG. 6, the apparatus includes:
a first receiver 601, a searching unit 602 and an entry generating unit 603;
the first receiver 601 is configured to receive a first packet;
the searching unit 602 is configured to search a flow table for a first entry matching the first packet, where a set formed by fields that are in the first entry and match the first packet is a first set; and
the entry generating unit 603 is configured to generate a second entry according to the first entry, where a set formed by fields that are in the second entry and match the first packet is a second set, the first set is a subset of the second set, and the first set is not equal to the second set.

For specific implementation of the first receiver 601, reference is made to 101 in Embodiment 1.

For specific implementation of the searching unit 602, reference is made to 102 in

### Embodiment 1.

For specific implementation of the entry generating unit 603, reference is made to 103 in Embodiment 1.

It can be seen that, with the stream forwarding apparatus provided in the embodiment, the second entry may be generated according to the first entry matching a received packet. The stream forwarding apparatus does not need to interact with a control plane apparatus, reducing an occupied bandwidth of a control channel between the stream forwarding apparatus and the control plane apparatus.

Optionally,
the apparatus further includes a processing unit, where the processing unit is configured to process the first packet according to the second entry.

For specific implementation of the processing unit, reference is made to 104 in Embodiment 1.

Optionally,
the apparatus further includes a transmitter, where the transmitter is configured to send the second entry to a control plane apparatus through a control channel, and the control plane apparatus is a control plane apparatus in a network architecture in which controlling and forwarding are separated.

For specific implementation of the transmitter, reference is made to 105 in Embodiment 1.

Optionally,
the first receiver 601 is further configured to receive a second packet after the stream forwarding apparatus generates the second entry according to the first entry;
the searching unit 602 is further configured to determine whether the second entry matches the second packet; and
the processing unit is further configured to process, by the stream forwarding apparatus, the second packet according to the second entry when the second entry matches the second packet.

For specific implementation of the first receiver 601, reference is made to 106 in Embodiment 1.

For specific implementation of the searching unit 602, reference is made to 107 in Embodiment 1.

For specific implementation of the processing unit, reference is made to 107 in Embodiment 1.

Compared with the first entry, the second entry is an exact matching entry. If a packet received by the stream forwarding apparatus matches the second entry, the packet is sure to match the first entry.

In the solution, it may be implemented that a packet that matches both the first entry and the second entry is processed according to the second entry.

Optionally,
the searching unit 602 is further configured to determine whether the first entry matches the second packet when the second entry does not match the second packet; and
the processing unit is further configured to process the second packet according to the first entry when the first entry matches the second packet.

For specific implementation of the searching unit 602, reference is made to 108 in Embodiment 1.

For specific implementation of the processing unit, reference is made to 108 in Embodiment 1.

In the solution, it may be implemented that a packet that matches the first entry but does not match the second entry is processed according to the first entry.

### Embodiment 4

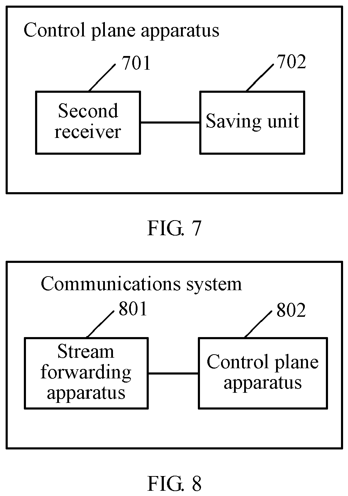

An embodiment of the present invention provides a control plane apparatus, and the control plane apparatus is a control plane apparatus in a network architecture in which controlling and forwarding are separated. The control plane apparatus may obtain an exact matching entry sent by a stream forwarding apparatus. In a process of obtaining an exact matching entry, the stream forwarding apparatus does not need to interact with the control plane apparatus. The control plane apparatus provided in the embodiment may be implemented by using the method for receiving a message provided in Embodiment 2. As shown in FIG. 7, the apparatus includes:
a second receiver 701 and a saving unit 702;
the second receiver 701 is configured to receive a first message sent by the stream forwarding apparatus through a control channel, where the first message includes a second entry, and the second entry is obtained by the following means: the stream forwarding apparatus receives a first packet; the stream forwarding apparatus searches a flow table for a first entry matching the first packet, where a set formed by fields that are in the first entry and match the first packet is a first set; the stream forwarding apparatus generates a second entry according to the first entry, where a set formed by fields that are in the second entry and match the first packet is a second set, the first set is a subset of the second set, and the first set is not equal to the second set; and
the saving unit 702 is configured to save the second entry.

For specific implementation of the second receiver 701, reference is made to 201 in Embodiment 2.

For specific implementation of the saving unit 702, reference is made to 202 in Embodiment 2.

It can be seen that, with the technical solution provided in the embodiment, the control plane apparatus may obtain the exact matching entry generated by the stream forwarding apparatus. The exact matching entry is generated by the stream forwarding apparatus according to a first entry matching a received packet. In a process of generating an exact matching entry, the stream forwarding apparatus does not need to interact with the control plane apparatus. Therefore, the technical solution provided in the embodiment reduces an occupied bandwidth of the control channel between the stream forwarding apparatus and the control plane apparatus.

### Embodiment 5

An embodiment of the present invention provides a communications system, including a stream forwarding apparatus and a control plane apparatus. In a process of obtaining an exact matching entry, the stream forwarding apparatus does not need to interact with the control plane apparatus. As shown in FIG. 8, the system includes:
a stream forwarding apparatus 801 and a control plane apparatus 802, where the stream forwarding apparatus is a stream forwarding apparatus in a network architecture in which controlling and forwarding are separated; and the control plane apparatus 802 is a control plane apparatus in a network architecture in which controlling and forwarding are separated;
the stream forwarding apparatus 801 includes a first receiver, a searching unit, an entry generating unit and a transmitter;
the first receiver is configured to receive a first packet;
the searching unit is configured to search a flow table for a first entry matching the first packet, where a set formed by fields that are in the first entry and match the first packet is a first set;
the entry generating unit is configured to generate a second entry according to the first entry, where a set formed by fields that are in the second entry and match the first packet is a second set, the first set is a subset of the second set, and the first set is not equal to the second set; and
the transmitter is configured to send a first message to the control plane apparatus through a control channel, where the first message includes the second entry;
the control plane apparatus 802 includes a second receiver and a saving unit;
the second receiver is configured to receive the first message through the control channel; and
the saving unit is configured to save the second entry in the control plane apparatus.

The stream forwarding apparatus 801 may be implemented by using the method for generating the entry provided in Embodiment 1.

Specifically, the first receiver in the stream forwarding apparatus 801 may be implemented through 601 in Embodiment 3. The searching unit in the stream forwarding apparatus 801 may be implemented through 602 in Embodiment 3. The entry generating unit in the stream forwarding apparatus 801 may be implemented through 603 in Embodiment 3.

The control plane apparatus 802 may be implemented by using the method for receiving a message provided in Embodiment 2.

Specifically, the second receiver in the control plane apparatus 802 may be implemented through 701 in Embodiment 4. The saving unit in the control plane apparatus 802 may be implemented through 702 in Embodiment 4.

It can be seen that, with the communications system provided in the embodiment, the control plane apparatus may obtain an exact matching entry generated by the stream forwarding apparatus. The exact matching entry is generated by the stream forwarding apparatus according to the first entry matching a received packet. In a process of generating an exact matching entry, the stream forwarding apparatus does not need to interact with the control plane apparatus. Therefore, the technical solution provided in the embodiment reduces an occupied bandwidth of the control channel between the stream forwarding apparatus and the control plane apparatus.

A person of ordinary skill in the art may understand that all or a part of the processes of the methods in the foregoing embodiments may be implemented by computer program instructing relevant hardware. The program may be stored in a computer readable storage medium. When the program runs, the processes of the method embodiments are performed. The storage medium may be a magnetic disk, an optical disc, a read-only memory (Read-Only Memory, ROM), a random access memory (Random Access Memory, RAM), and so on.

The foregoing discloses merely exemplary embodiments of the present invention, but is certainly not intended to limit the scope of the claims of the present invention. Therefore, any equivalent variation made according to the claims of the present invention should still fall within the scope of the present invention.

## Claims

1. A method for processing one or more packets in a network architecture in which controlling and forwarding are separated, the method comprising:
receiving, by a stream forwarding apparatus, a first packet, wherein the stream forwarding apparatus is a stream forwarding apparatus in the network architecture in which controlling and forwarding are separated;
searching, by the stream forwarding apparatus, a flow table for a first entry matching the first packet, wherein a set formed by fields that are in the first entry and match the first packet is a first set;
**characterized in that** the method further comprises:
generating, by the stream forwarding apparatus, a second entry according to the first entry, wherein a set formed by fields that are in the second entry and match the first packet is a second set, the first set is a subset of the second set, and the first set is not equal to the second set; and
processing, by the stream forwarding apparatus, the first packet according to the second entry;
wherein generating a second entry comprises:
parsing the first packet to extract one or more fields which are not in the first set; and
forming the second entry by copying the content of the first entry, and adding the one or more extracted fields;
wherein, after the generating, by the stream forwarding apparatus, a second entry according to the first entry, the method further comprises:
sending, by the stream forwarding apparatus, the second entry to a control plane apparatus through a control channel, wherein the control plane apparatus is a control plane apparatus in the network architecture in which controlling and forwarding are separated.

2. The method according to claim 1,
after the generating, by the stream forwarding apparatus, a second entry according to the first entry, further comprising:
receiving, by the stream forwarding apparatus, a second packet; and
determining, by the stream forwarding apparatus, whether the second entry matches the second packet, and when the second entry matches the second packet, processing, by the stream forwarding apparatus, the second packet according to the second entry.

3. The method according to claim 2, comprising:
when the second entry does not match the second packet, determining, by the stream forwarding apparatus, whether the first entry matches the second packet, and when the first entry matches the second packet, processing, by the stream forwarding apparatus, the second packet according to the first entry.

4. The method according to any of claims 1 to 3 further comprising:
calculating, by the stream forwarding apparatus, a number of packets that are received by the stream forwarding apparatus and match the second entry through a counter, and recording a calculation result; and
providing, by the stream forwarding apparatus, the recorded calculation result to the control plane apparatus in response to a request for obtaining the recorded calculation result received from the control plane apparatus.

5. A stream forwarding apparatus, wherein the stream forwarding apparatus is a stream forwarding apparatus in a network architecture in which controlling and forwarding are separated, and the stream forwarding apparatus comprises:
a first receiver, a searching unit, an entry generating unit and a processing unit;
the first receiver is configured to receive a first packet;
the searching unit is configured to search a flow table for a first entry matching the first packet, wherein a set formed by fields that are in the first entry and match the first packet is a first set;
**characterized in that**:
the entry generating unit is configured to generate a second entry according to the first entry, wherein a set formed by fields that are in the second entry and match the first packet is a second set, the first set is a subset of the second set, and the first set is not equal to the second set; and
the processing unit is configured to process the first packet according to the second entry;
wherein generating a second entry comprises:
parsing the first packet to extract one or more fields which are not in the first set;
forming the second entry by copying the content of the first entry, and adding the one or more extracted fields; and
wherein the apparatus further comprises:
a transmitter, wherein the transmitter is configured to send the second entry to a control plane apparatus through a control channel, wherein the control plane apparatus is a control plane apparatus in the network architecture in which controlling and forwarding are separated.

6. The apparatus according to claim 5, wherein
the first receiver is further configured to receive a second packet after the stream forwarding apparatus generates the second entry according to the first entry;
the searching unit is further configured to determine whether the second entry matches the second packet; and
the processing unit is further configured to process, by the stream forwarding apparatus, the second packet according to the second entry when the second entry matches the second packet.

7. The apparatus according to claim 6, wherein
the searching unit is further configured to determine whether the first entry matches the second packet when the second entry does not match the second packet; and
the processing unit is further configured to process the second packet according to the first entry when the first entry matches the second packet.

8. The apparatus according to any of claims 5 to 7, wherein the apparatus is further configured for:
calculating a number of packets that are received by the stream forwarding apparatus and match the second entry through a counter, and recording a calculation result; and
providing the recorded calculation result to the control plane apparatus in response to a request for obtaining the recorded calculation result received from the control plane apparatus.

9. A communications system, comprising:
a stream forwarding apparatus and a control plane apparatus, wherein the stream forwarding apparatus is a stream forwarding apparatus in a network architecture in which controlling and forwarding are separated; and the control plane apparatus is a control plane apparatus in the network architecture in which controlling and forwarding are separated;
the stream forwarding apparatus comprises a first receiver, a searching unit, an entry generating unit, a processing unit and a transmitter;
the first receiver is configured to receive a first packet;
the searching unit is configured to search a flow table for a first entry matching the first packet, wherein a set formed by fields that are in the first entry and match the first packet is a first set;
**characterized in that**:
the entry generating unit is configured to generate a second entry according to the first entry, wherein a set formed by fields that are in the second entry and match the first packet is a second set, the first set is a subset of the second set, and the first set is not equal to the second set;
the processing unit is configured to process the first packet according to the second entry; and
the transmitter is configured to send a first message to the control plane apparatus through a control channel, wherein the first message comprises the second entry;
the control plane apparatus comprises a second receiver and a saving unit;
the second receiver is configured to receive the first message through a control channel; and
the saving unit is configured to save the second entry in the control plane apparatus;
wherein generating a second entry comprises:
parsing the first packet to extract one or more fields which are not in the first set;
forming the second entry by copying the content of the first entry, and adding the one or more extracted fields.

10. The communications system of claim 9, wherein the stream forwarding apparatus is further configured for:
calculating a number of packets that are received by the stream forwarding apparatus and match the second entry through a counter, and recording a calculation result; and
providing the recorded calculation result to the control plane apparatus in response to a request for obtaining the recorded calculation result received from the control plane apparatus.

## Patentansprüche

1. Verfahren zum Verarbeiten von einem oder mehreren Paketen in einer Netzwerkarchitektur, in der Steuerung und Weiterleitung getrennt sind, wobei das Verfahren Folgendes umfasst:
Empfangen, durch eine Stromweiterleitungsvorrichtung, eines ersten Pakets, wobei die Stromweiterleitungsvorrichtung eine Stromweiterleitungsvorrichtung in der Netzwerkarchitektur ist, in der Steuerung und Weiterleitung getrennt sind;
Durchsuchen, durch die Stromweiterleitungsvorrichtung, einer Flusstabelle nach einem ersten Eintrag, der dem ersten Paket entspricht, wobei eine Menge, die durch Felder, die im ersten Eintrag vorhanden sind und dem ersten Paket entsprechen, gebildet wird, eine erste Menge ist;
**dadurch gekennzeichnet, dass** das Verfahren ferner Folgendes umfasst:
Erzeugen, durch die Stromweiterleitungsvorrichtung, eines zweiten Eintrags gemäß dem ersten Eintrag, wobei eine Menge, die durch Felder, die in einem zweiten Eintrag vorhanden sind und dem ersten Paket entsprechen, gebildet wird, eine zweite Menge ist, die erste Menge eine Teilmenge der zweiten Menge ist und die erste Menge nicht gleich der zweiten Menge ist; und
Verarbeiten, durch die Stromweiterleitungsvorrichtung, des ersten Pakets gemäß dem zweiten Eintrag;
wobei das Erzeugen eines zweiten Eintrags Folgendes umfasst:
Parsen des ersten Pakets, so dass ein oder mehrere Felder, die nicht in der ersten Menge sind, extrahiert werden; und
Bilden des zweiten Eintrags, indem der Inhalt des ersten Eintrags kopiert wird und das eine oder die mehreren extrahierten Felder hinzugefügt werden;
wobei das Verfahren nach dem Erzeugen, durch die Stromweiterleitungsvorrichtung,
eines zweiten Eintrags gemäß dem ersten Eintrag, ferner Folgendes umfasst:
Senden, durch die Stromweiterleitungsvorrichtung, des zweiten Eintrags über einen Steuerkanal an eine Steuerebenenvorrichtung, wobei die Steuerebenenvorrichtung eine Steuerebenenvorrichtung in der Netzwerkarchitektur ist, in der Steuerung und Weiterleitung getrennt sind.

2. Verfahren nach Anspruch 1, das nach dem Erzeugen, durch die Stromweiterleitungsvorrichtung, eines zweiten Eintrags gemäß dem ersten Eintrag ferner Folgendes umfasst:
Empfangen, durch die Stromweiterleitungsvorrichtung, eines zweiten Pakets und
Bestimmen, durch die Stromweiterleitungsvorrichtung, ob der zweite Eintrag dem zweiten Paket entspricht, und wenn der zweite Eintrag dem zweiten Paket entspricht, Verarbeiten, durch die Stromweiterleitungsvorrichtung, des zweiten Pakets gemäß dem zweiten Eintrag.

3. Verfahren nach Anspruch 2, umfassend:
wenn der zweite Eintrag nicht dem zweiten Paket entspricht, Bestimmen, durch die Stromweiterleitungsvorrichtung, ob der erste Eintrag dem zweiten Paket entspricht, und wenn der erste Eintrag dem zweiten Paket entspricht, Verarbeiten, durch die Stromweiterleitungsvorrichtung, des zweiten Pakets gemäß dem ersten Eintrag.

4. Verfahren nach einem der Ansprüche 1 bis 3, ferner umfassend:
Berechnen, durch die Stromweiterleitungsvorrichtung, einer Anzahl von Paketen, die durch die Stromweiterleitungsvorrichtung empfangen werden und dem zweiten Eintrag entsprechen, mittels eines Zählers und Aufzeichnen eines Berechnungsergebnisses; und
Bereitstellen, durch die Stromweiterleitungsvorrichtung, des aufgezeichneten Berechnungsergebnisses für die Steuerebenenvorrichtung als Reaktion auf eine Anfrage zum Erhalten des aufgezeichneten Berechnungsergebnisses, die von der Steuerebenenvorrichtung empfangen wird.

5. Stromweiterleitungsvorrichtung, wobei die Stromweiterleitungsvorrichtung eine Stromweiterleitungsvorrichtung in einer Netzwerkarchitektur ist, in der Steuerung und Weiterleitung getrennt sind, und die Stromweiterleitungsvorrichtung Folgendes umfasst:
einen ersten Empfänger, eine Sucheinheit, eine Eintragserzeugungseinheit und eine Verarbeitungseinheit;
der erste Empfänger ist zum Empfangen eines ersten Pakets konfiguriert;
die Sucheinheit ist dazu konfiguriert, eine Flusstabelle nach einem ersten Eintrag zu durchsuchen, der dem ersten Paket entspricht, wobei eine Menge, die durch Felder, die im ersten Eintrag vorhanden sind und dem ersten Paket entsprechen, gebildet wird, eine erste Menge ist;
**dadurch gekennzeichnet, dass**
die Eintragserzeugungseinheit dazu konfiguriert ist, einen zweiten Eintrag gemäß dem ersten Eintrag zu erzeugen, wobei eine Menge, die durch Felder, die im zweiten Eintrag vorhanden sind und dem ersten Paket entsprechen, gebildet wird, eine zweite Menge ist, die erste Menge eine Teilmenge der zweiten Menge ist und die erste Menge nicht gleich der zweiten Menge ist; und
die Verarbeitungseinheit dazu konfiguriert ist, das erste Paket gemäß dem zweiten Eintrag zu verarbeiten;
wobei das Erzeugen eines zweiten Eintrags Folgendes umfasst:
Parsen des ersten Pakets, so dass ein oder mehrere Felder, die nicht in der ersten Menge sind, extrahiert werden;
Bilden des zweiten Eintrags, indem der Inhalt des ersten Eintrags kopiert wird und das eine oder die mehreren extrahierten Felder hinzugefügt werden; und
wobei die Vorrichtung ferner Folgendes umfasst:
einen Sender, wobei der Sender dazu konfiguriert ist, den zweiten Eintrag über einen Steuerkanal an eine Steuerebenenvorrichtung zu senden, wobei die Steuerebenenvorrichtung eine Steuerebenenvorrichtung in der Netzwerkarchitektur ist, in der Steuerung und Weiterleitung getrennt sind.

6. Vorrichtung nach Anspruch 5, wobei
der erste Empfänger ferner dazu konfiguriert ist, ein zweites Paket zu empfangen, nachdem die Stromweiterleitungsvorrichtung den zweiten Eintrag gemäß dem ersten Eintrag erzeugt;
die Sucheinheit ferner dazu konfiguriert ist, zu bestimmen, ob der zweite Eintrag dem zweiten Paket entspricht; und
die Verarbeitungseinheit ferner dazu konfiguriert ist, das zweite Paket durch die Stromweiterleitungsvorrichtung gemäß dem zweiten Eintrag zu verarbeiten, wenn der zweite Eintrag dem zweiten Paket entspricht.

7. Vorrichtung nach Anspruch 6, wobei
die Sucheinheit ferner dazu konfiguriert ist, zu bestimmen, ob der erste Eintrag dem zweiten Paket entspricht, wenn der zweite Eintrag nicht dem zweiten Paket entspricht; und
die Verarbeitungseinheit ferner dazu konfiguriert ist, das zweite Paket gemäß dem ersten Eintrag zu verarbeiten, wenn der erste Eintrag dem zweiten Paket entspricht.

8. Vorrichtung nach einem der Ansprüche 5 bis 7, wobei die Vorrichtung ferner konfiguriert ist zum:
Berechnen einer Anzahl von Paketen, die durch die Stromweiterleitungsvorrichtung empfangen werden und dem zweiten Eintrag entsprechen, mittels eines Zählers und Aufzeichnen eines Berechnungsergebnisses; und
Bereitstellen des aufgezeichneten Berechnungsergebnisses für die Steuerebenenvorrichtung als Reaktion auf eine Anfrage zum Erhalten des aufgezeichneten Berechnungsergebnisses, die von der Steuerebenenvorrichtung empfangen wird.

9. Kommunikationssystem, umfassend:
eine Stromweiterleitungsvorrichtung und eine Steuerebenenvorrichtung, wobei die Stromweiterleitungsvorrichtung eine Stromweiterleitungsvorrichtung in einer Netzwerkarchitektur ist, in der Steuerung und Weiterleitung getrennt sind; und die Steuerebenenvorrichtung eine Steuerebenenvorrichtung in der Netzwerkarchitektur ist, in der Steuerung und Weiterleitung getrennt sind;
die Stromweiterleitungsvorrichtung umfasst einen ersten Empfänger, eine Sucheinheit, eine Eintragserzeugungseinheit, eine Verarbeitungseinheit und einen Sender;
der erste Empfänger ist zum Empfangen eines ersten Pakets konfiguriert;
die Sucheinheit ist dazu konfiguriert, eine Flusstabelle nach einem ersten Eintrag zu durchsuchen, der dem ersten Paket entspricht, wobei eine Menge, die durch Felder, die im ersten Eintrag vorhanden sind und dem ersten Paket entsprechen, gebildet wird, eine erste Menge ist;
**dadurch gekennzeichnet, dass**
die Eintragserzeugungseinheit dazu konfiguriert ist, einen zweiten Eintrag gemäß dem ersten Eintrag zu erzeugen, wobei eine Menge, die durch Felder, die im zweiten Eintrag vorhanden sind und dem ersten Paket entsprechen, gebildet wird, eine zweite Menge ist, die erste Menge eine Teilmenge der zweiten Menge ist und die erste Menge nicht gleich der zweiten Menge ist;
die Verarbeitungseinheit dazu konfiguriert ist, das erste Paket gemäß dem zweiten Eintrag zu verarbeiten; und
der Sender ist dazu konfiguriert, eine erste Nachricht über einen Steuerkanal an die Steuerebenenvorrichtung zu senden, wobei die erste Nachricht den zweiten Eintrag umfasst;
die Steuerebenenvorrichtung umfasst einen zweiten Empfänger und eine Speichereinheit;
der zweite Empfänger ist dazu konfiguriert, die erste Nachricht über einen Steuerkanal zu empfangen; und
die Speichereinheit ist dazu konfiguriert, den zweiten Eintrag in der Steuerebenenvorrichtung zu speichern;
wobei das Erzeugen eines zweiten Eintrags Folgendes umfasst:
Parsen des ersten Pakets, so dass ein oder mehrere Felder, die nicht in der ersten Menge sind, extrahiert werden;
Bilden des zweiten Eintrags, indem der Inhalt des ersten Eintrags kopiert wird und das eine oder die mehreren extrahierten Felder hinzugefügt werden.

10. Kommunikationssystem nach Anspruch 9, wobei die Stromweiterleitungsvorrichtung ferner konfiguriert ist zum:
Berechnen einer Anzahl von Paketen, die durch die Stromweiterleitungsvorrichtung empfangen werden und dem zweiten Eintrag entsprechen, mittels eines Zählers, und Aufzeichnen eines Berechnungsergebnisses; und
Bereitstellen des aufgezeichneten Berechnungsergebnisses für die Steuerebenenvorrichtung als Reaktion auf eine Anfrage zum Erhalten des aufgezeichneten Berechnungsergebnisses, die von der Steuerebenenvorrichtung empfangen wird.

## Revendications

1. Procédé permettant de traiter un ou plusieurs paquets dans une architecture réseau dans laquelle le contrôle et l'acheminement sont séparés, le procédé comprenant les étapes suivantes :
recevoir, par un appareil d'acheminement de flux, un premier paquet, l'appareil d'acheminement de flux étant un appareil d'acheminement de flux dans l'architecture réseau dans laquelle le contrôle et l'acheminement sont séparés ;
rechercher, par l'appareil d'acheminement de flux, dans une table de flux une première entrée correspondant au premier paquet, un ensemble formé par des champs qui sont dans la première entrée et qui correspondent au premier paquet étant un premier ensemble ;
**caractérisé en ce que** le procédé comprend en outre :
générer, par l'appareil d'acheminement de flux, une deuxième entrée selon la première entrée, un ensemble formé par des champs qui sont dans la deuxième entrée et qui correspondent au premier paquet étant un deuxième ensemble, le premier ensemble étant un sous-ensemble du deuxième ensemble, et le premier ensemble n'étant pas égal au deuxième ensemble ; et
traiter, par l'appareil d'acheminement de flux, le premier paquet selon la deuxième entrée ;
l'étape consistant à générer une deuxième entrée comprenant :
analyser le premier paquet pour extraire un ou plusieurs champs qui ne sont pas dans le premier ensemble ; et
former la deuxième entrée en copiant le contenu de la première entrée, et ajouter les un ou plusieurs champs extraits ;
après l'étape consistant à générer, par l'appareil d'acheminement de flux, une deuxième entrée selon la première entrée, le procédé comprenant en outre :
envoyer, par l'appareil d'acheminement de flux, la deuxième entrée à un appareil de plan de contrôle par l'intermédiaire d'un canal de contrôle, l'appareil de plan de contrôle étant un appareil de plan de contrôle dans l'architecture réseau dans laquelle le contrôle et l'acheminement sont séparés.

2. Procédé selon la revendication 1,
après l'étape consistant à générer, par l'appareil d'acheminement de flux, une deuxième entrée selon la première entrée, comprenant en outre :
recevoir, par l'appareil d'acheminement de flux, un deuxième paquet ; et
déterminer, par l'appareil d'acheminement de flux, si la deuxième entrée correspond au deuxième paquet, et lorsque la deuxième entrée correspond au deuxième paquet, traiter, par l'appareil d'acheminement de flux, le deuxième paquet selon la deuxième entrée.

3. Procédé selon la revendication 2, comprenant :
lorsque la deuxième entrée ne correspond pas au deuxième paquet, déterminer, par l'appareil d'acheminement de flux, si la première entrée correspond au deuxième paquet, et lorsque la première entrée correspond au deuxième paquet, traiter, par l'appareil d'acheminement de flux, le deuxième paquet selon la première entrée.

4. Procédé selon l'une quelconque des revendications 1 à 3, comprenant en outre :
calculer, par l'appareil d'acheminement de flux, un nombre de paquets qui sont reçus par l'appareil d'acheminement de flux et qui correspondent à la deuxième entrée par l'intermédiaire d'un compteur, et enregistrer un résultat de calcul ; et
fournir, par l'appareil d'acheminement de flux, le résultat de calcul enregistré à l'appareil de plan de contrôle en réponse à une requête d'obtenir le résultat de calcul enregistré reçue à partir de l'appareil de plan de contrôle.

5. Appareil d'acheminement de flux, dans lequel l'appareil d'acheminement de flux est un appareil d'acheminement de flux dans une architecture réseau dans laquelle le contrôle et l'acheminement sont séparés, et l'appareil d'acheminement de flux comprend :
un premier récepteur, une unité de recherche, une unité de génération d'entrée et une unité de traitement ;
le premier récepteur est configuré pour recevoir un premier paquet ;
l'unité de recherche est configurée pour rechercher dans une table de flux une première entrée correspondant au premier paquet, un ensemble formé par des champs qui sont dans le première entrée et qui correspondent au premier paquet étant un premier ensemble ;
**caractérisé en ce que** :
l'unité de génération d'entrée est configurée pour générer une deuxième entrée selon la première entrée, un ensemble formé par des champs qui sont dans la deuxième entrée et qui correspondent au premier paquet étant un deuxième ensemble, le premier ensemble étant un sous-ensemble du deuxième ensemble, et le premier ensemble n'étant pas égal au deuxième ensemble ; et
l'unité de traitement est configurée pour traiter le premier paquet selon la deuxième entrée ;
l'étape consistant à générer une deuxième entrée comprenant :
analyser le premier paquet pour extraire un ou plusieurs champs qui ne sont pas dans le premier ensemble ;
former la deuxième entrée en copiant le contenu de la première entrée, et ajouter les un ou plusieurs champs extraits ; et
l'appareil comprenant en outre :
un émetteur, l'émetteur étant configuré pour envoyer la deuxième entrée à un appareil de plan de contrôle par l'intermédiaire d'un canal de contrôle, l'appareil de plan de contrôle étant un appareil de plan de contrôle dans l'architecture réseau dans laquelle le contrôle et l'acheminement sont séparés.

6. Appareil selon la revendication 5, dans lequel :
le premier récepteur est en outre configuré pour recevoir un deuxième paquet après que l'appareil d'acheminement de flux a généré la deuxième entrée selon la première entrée ;
l'unité de recherche est en outre configurée pour déterminer si la deuxième entrée correspond au deuxième paquet ; et
l'unité de traitement est en outre configurée pour traiter, par l'appareil d'acheminement de flux, le deuxième paquet selon la deuxième entrée lorsque la deuxième entrée correspond au deuxième paquet.

7. Appareil selon la revendication 6, dans lequel :
l'unité de recherche est en outre configurée pour déterminer si la première entrée correspond au deuxième paquet lorsque la deuxième entrée ne correspond pas au deuxième paquet ; et
l'unité de traitement est en outre configurée pour traiter le deuxième paquet selon la première entrée lorsque la première entrée correspond au deuxième paquet.

8. Appareil selon l'une quelconque des revendications 5 à 7, dans lequel l'appareil est en outre configuré pour :
calculer un nombre de paquets qui sont reçus par l'appareil d'acheminement de flux et qui correspondent à la deuxième entrée par l'intermédiaire d'un compteur, et enregistrer un résultat de calcul ; et
fournir le résultat de calcul enregistré à l'appareil de plan de contrôle en réponse à une requête d'obtenir le résultat de calcul enregistré reçue à partir de l'appareil de plan de contrôle.

9. Système de communication, comprenant :
un appareil d'acheminement de flux et un appareil de plan de contrôle, dans lequel l'appareil d'acheminement de flux est un appareil d'acheminement de flux dans une architecture réseau dans laquelle le contrôle et l'acheminement sont séparés ; et l'appareil de plan de contrôle est un appareil de plan de contrôle dans l'architecture réseau dans laquelle le contrôle et l'acheminement sont séparés ;
l'appareil d'acheminement de flux comprend un premier récepteur, une unité de recherche, une unité de génération d'entrée, une unité de traitement et un émetteur ;
le premier récepteur est configuré pour recevoir un premier paquet ;
l'unité de recherche est configurée pour rechercher dans une table de flux une première entrée correspondant au premier paquet, un ensemble formé par des champs qui sont dans le première entrée et qui correspondent au premier paquet étant un premier ensemble ;
**caractérisé en ce que** :
l'unité de génération d'entrée est configurée pour générer une deuxième entrée selon la première entrée, un ensemble formé par des champs qui sont dans la deuxième entrée et qui correspondent au premier paquet étant un deuxième ensemble, le premier ensemble étant un sous-ensemble du deuxième ensemble, et le premier ensemble n'étant pas égal au deuxième ensemble ;
l'unité de traitement est configurée pour traiter le premier paquet selon la deuxième entrée ; et
l'émetteur est configuré pour envoyer un premier message à l'appareil de plan de contrôle par l'intermédiaire d'un canal de contrôle, le premier message comprenant la deuxième entrée ;
l'appareil de plan de contrôle comprend un deuxième récepteur et une unité de sauvegarde ;
le deuxième récepteur est configuré pour recevoir le premier message par l'intermédiaire d'un canal de contrôle ; et
l'unité de sauvegarde est configurée pour sauvegarder la deuxième entrée dans l'appareil de plan de contrôle ;
l'étape consistant à générer une deuxième entrée comprenant :
analyser le premier paquet pour extraire un ou plusieurs champs qui ne sont pas dans le premier ensemble ;
former la deuxième entrée en copiant le contenu de la première entrée, et ajouter les un ou plusieurs champs extraits.

10. Système de communication selon la revendication 9, dans lequel l'appareil d'acheminement de flux est en outre configuré pour :
calculer un nombre de paquets qui sont reçus par l'appareil d'acheminement de flux et qui correspondent à la deuxième entrée par l'intermédiaire d'un compteur, et enregistrer un résultat de calcul ; et
fournir le résultat de calcul enregistré à l'appareil de plan de contrôle en réponse à une requête d'obtenir le résultat de calcul enregistré reçue à partir de l'appareil de plan de contrôle.
